# EUROPEAN PATENT APPLICATION

(11) **EP 3 576 064 A1**
(43) Date of publication of application: **04.12.2019**
(21) Application number: 17894393.2
(22) Date of filing: 21.11.2017
(51) Int. Cl.: G08B 23/00, B60R 16/02, G08B 21/00, G10K 15/04

(54) **VEHICLE ALARM GENERATION DEVICE**

(30) Priority: 26.01.2017 JP 2017012148
(71) Applicant: Hino Motors, Ltd., Hino-shi, Tokyo 191-8660 (JP)
(72) Inventor: KOBAYASHI, Kozue, Hino-shi Tokyo 191-8660 (JP); KAMAGATA, Kazuki, Hino-shi Tokyo 191-8660 (JP)
(74) Representative: D Young & Co LLP
(86) International application number: PCT/JP2017/041851
(87) International publication number: WO 2018/139021

(57) **Abstract**

A vehicle alarm generation device generates an alarm sound inside a cabin of a vehicle. The vehicle alarm generation device includes an alarm acquiring unit that acquires an alarm level of an alarm to be generated, and an alarm generating unit that generates an alarm sound corresponding to the alarm level acquired by the alarm acquiring unit. The alarm generating unit configures the alarm sound with a chord including a plurality of sounds having a range of 200 Hz or higher and causes the chord and a rhythm of the alarm sound to vary in accordance with the alarm level.

## Description

### Technical Field

The present invention relates to a vehicle alarm generation device which generates an alarm sound inside a cabin of a vehicle.

### Background Art

A vehicle alarm generation device which generates various alarm sounds for a driver is provided in vehicles. Patent Literature 1 discloses that an alarm sound to be generated is configured with one sound having a single frequency or two sounds having frequencies close to each other.

### Citation List

### Patent Literature

Patent Literature 1: Japanese Unexamined Patent Publication No. 2001-209871

### Summary of Invention

### Technical Problem

Incidentally, people have difficulty in hearing sound due to aging and particularly have difficulty in hearing sound in a high frequency region. Frequency regions which are generally employed for an alarm sound include frequency regions in which aged people have difficulty in hearing. In addition, an alarm sound for a high degree of urgency is often configured with a sound having a higher frequency than an alarm sound for a low degree of urgency. Accordingly, there is a possibility that an alarm sound for a low degree of urgency using a low frequency region may sound louder to aged people than an alarm sound for a high degree of urgency using a high frequency region. In such a case, there is a possibility that a driver may not be able to be suitably notified with an alarm sound. Furthermore, an alarm sound is amplified due to resonance inside a passenger cabin such that the sound pressure increases or is attenuated such that the sound pressure decreases. Therefore, an alarm sound sounds loud or quiet depending on a position inside a cabin.

An object of an aspect of the present invention is to provide a vehicle alarm generation device capable of generating an alarm sound which can be easily heard by a driver.

### Solution to Problem

According to an aspect of the present invention, there is provided a vehicle alarm generation device which generates an alarm sound inside a cabin of a vehicle. The vehicle alarm generation device includes an alarm acquiring unit that acquires an alarm level of an alarm to be generated, and an alarm generating unit that generates an alarm sound corresponding to the alarm level acquired by the alarm acquiring unit. The alarm generating unit configures the alarm sound with a plurality of sounds having a range of 200 Hz or higher and causes a chord and a rhythm of the alarm sound to vary in accordance with the alarm level.

In this vehicle alarm generation device, since the alarm sound is configured with a plurality of sounds having a range of 200 Hz or higher, the alarm sound can include a sound in a frequency region which can be heard even by a driver having difficulty in hearing sound due to aging. Moreover, since the alarm sound is configured with a plurality of sounds, differences between sound pressures at positions inside the cabin are reduced. Accordingly, the driver can hear an alarm sound at a target sound pressure or a sound pressure close to the target sound pressure. Furthermore, since the chord and the rhythm of the alarm sound vary in accordance with the alarm level, even if the driver hears a quiet alarm sound, the driver can understand the alarm level of the alarm sound. Accordingly, the driver can easily hear an alarm sound.

The alarm generating unit may generate an alarm sound with a dissonance when the alarm level is equivalent to or higher than a reference level and may generate an alarm sound with a consonance when the alarm level is lower than the reference level. In this vehicle alarm generation device, an alarm sound with a dissonance is generated when the alarm level is equivalent to or higher than the reference level, so that a driver can feel a sense of seriousness. An alarm sound with a consonance is generated when the alarm level is lower than the reference level, so that the driver can feel a sense of security. Accordingly, the driver can instinctively understand the alarm level of an alarm sound.

The alarm generating unit may generate an alarm sound having a rhythm with a short intermittence interval when the alarm level is equivalent to or higher than the reference level, compared to when the alarm level is lower than the reference level. In this vehicle alarm generation device, an alarm sound having a rhythm with a short intermittence interval is generated when the alarm level is equivalent to or higher than the reference level, compared to when the alarm level is lower than the reference level, so that the driver can feel a sense of urgency. Accordingly, the driver can instinctively understand the alarm level of an alarm sound.

The alarm generating unit may generate an alarm sound having an irregular rhythm when the alarm level is equivalent to or higher than the reference level and may generate an alarm sound having a regular rhythm when the alarm level is lower than the reference level. In this vehicle alarm generation device, an alarm sound having an irregular rhythm is generated when the alarm level is equivalent to or higher than the reference level, so that a driver can feel a sense of seriousness. On the other hand, an alarm sound having a regular rhythm is generated when the alarm level is lower than the reference level, so that the driver can feel a sense of security. Accordingly, the driver can instinctively understand the alarm level of an alarm sound.

### Advantageous Effects of Invention

According to the aspect of the present invention, it is possible to generate an alarm sound which can be easily heard by a driver.

### Brief Description of Drawings

FIG. 1 is a schematic block diagram of a vehicle alarm generation device according to the present embodiment.
FIG. 2 is a graph showing a relationship between a frequency of an alarm sound and ability to hear at respective ages.
FIG. 3 is a view illustrating a relationship between an alarm level and a frequency region.
FIGS. 4(a) to 4(c) are views illustrating examples of chords and rhythms of alarm sounds.

### Description of Embodiment

Hereinafter, an embodiment of the present invention will be described with reference to the drawings. The same reference signs are applied to the same elements in description of the drawings, and duplicated description will be omitted.

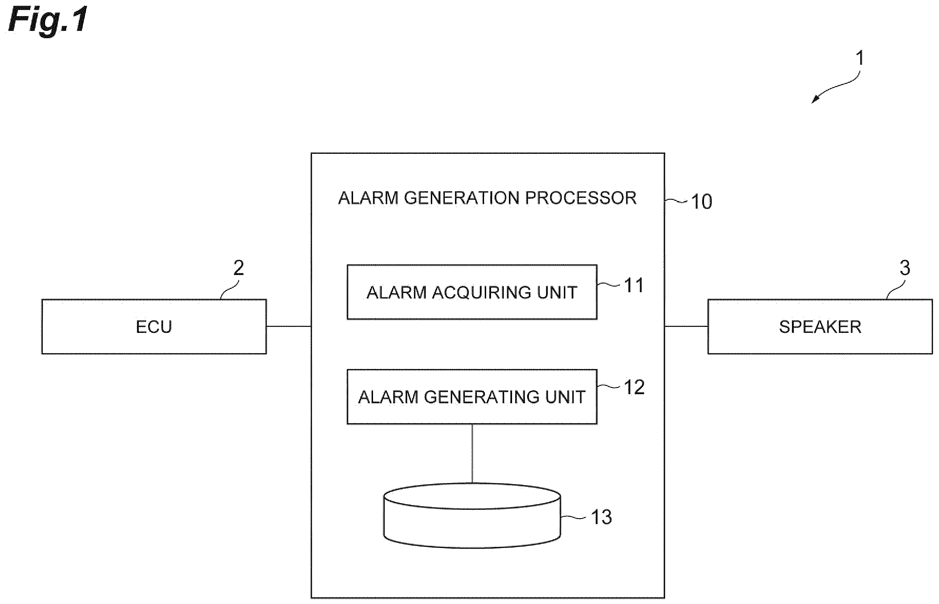

As illustrated in FIG. 1, a vehicle alarm generation device 1 according to the present embodiment is a device which is mounted in a vehicle (not illustrated) and generates an alarm sound inside a cabin of the vehicle. The vehicle alarm generation device 1 includes an electronic control unit (ECU) 2, speakers 3, and an alarm generation processor 10.

The ECU 2 is a controller which controls each of units in the vehicle. Examples of the ECU 2 include an engine ECU which controls an engine (not illustrated), and a brake ECU which controls a brake. The ECU 2 is an electronic control unit having a central processing unit (CPU), a read only memory (ROM), a random access memory (RAM), and a communication circuit for controller area network (CAN) communication or the like. The ECU 2 realizes various functions by loading the RAM with a program stored in the ROM and causing the CPU to execute the program loaded into the RAM. The ECU 2 may be constituted of a plurality of electronic control units. The alarm generation processor 10 is connected to the ECU 2 via the communication circuit for CAN communication or the like. When warning information related to a control subject is acquired, the ECU 2 transmits the information and an alarm level of the alarm to the alarm generation processor 10, as an instruction for generating an alarm.

Information of an alarm includes specific details of the alarm, flags corresponding to these details, and the like. The alarm level indicates the urgency or the importance of an alarm. That is, the alarm levels are classified depending on the urgency or the importance corresponding to the details of an alarm, and the alarm level becomes higher as the urgency, the importance, or the like increases. For example, the alarm levels are classified into three levels, that is, a first alarm level indicating a warning, a second alarm level indicating an alert, and a third alarm level indicating a notification. In the ECU 2, the details of alarms and the alarm levels are associated with each other.

The speakers 3 are units which output audio. For example, the speakers 3 are provided on the right and the left of a driver's seat.

The alarm generation processor 10 generates an alarm sound from the speakers 3 based on an instruction for generating an alarm transmitted from the ECU 2. For example, the alarm generation processor 10 is constituted of a microcomputer built into a meter panel (not illustrated). The alarm generation processor 10 functionally includes an alarm acquiring unit 11 and an alarm generating unit 12.

The alarm acquiring unit 11 acquires the alarm level of an alarm to be generated. That is, the alarm acquiring unit 11 is connected to the ECU 2 via the communication circuit for CAN communication or the like and acquires the alarm level of an alarm to be generated, from an instruction for generating an alarm transmitted from the ECU 2.

The alarm generating unit 12 generates an alarm sound corresponding to the alarm level acquired by the alarm acquiring unit 11. A storage unit 13, in which various alarm sounds to be generated are recorded, is connected to the alarm generating unit 12. Examples of the storage unit 13 include a ROM and a hard disk.

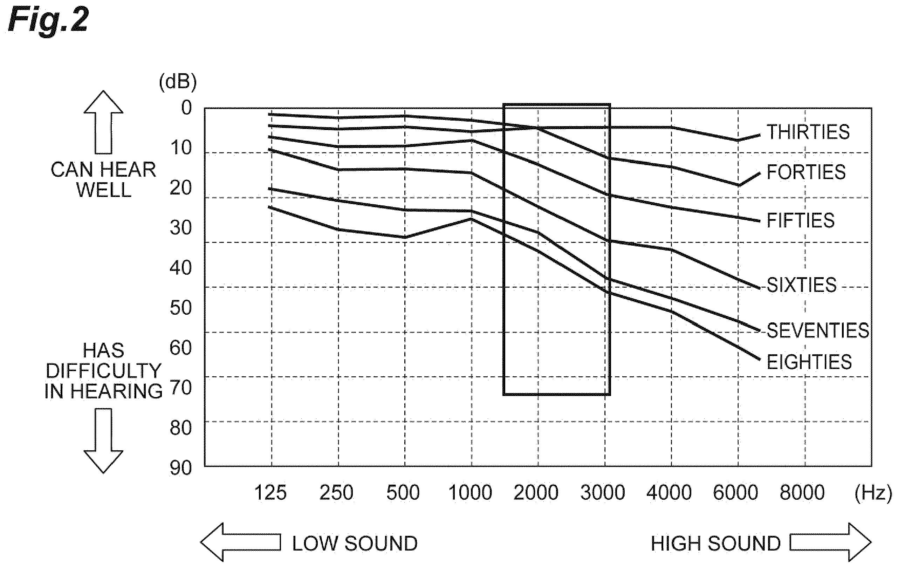

The alarm sounds stored in the storage unit 13 are configured with a plurality of sounds having a range of 200 Hz or higher. As illustrated in FIG. 2, people have difficulty in hearing sound due to aging. Particularly, when the frequency exceeds 200 Hz, difficulty in hearing having progressed due to aging becomes significant. Therefore, the alarm sound is configured with a plurality of sounds having a range of 200 Hz or higher, such that a sound in a frequency region which can be heard even by a driver having difficulty in hearing sound due to aging is included in a warning sound. In this case, the alarm sound may be configured with a plurality of sounds having a range of 1,000 Hz or higher. The alarm sound need only be configured with a plurality of sounds, and the number of sounds is not particularly limited. In the plurality of sounds configuring an alarm sound, the difference between the frequency of a sound having the lowest frequency and the frequency of a sound having the highest frequency is 200 Hz or higher.

In addition, the alarm sounds stored in the storage unit 13 are classified in accordance with the alarm levels, and the chords and the rhythms of the alarm sounds vary in accordance with the alarm levels. The storage unit 13 stores the alarm sounds in association with the alarm levels.

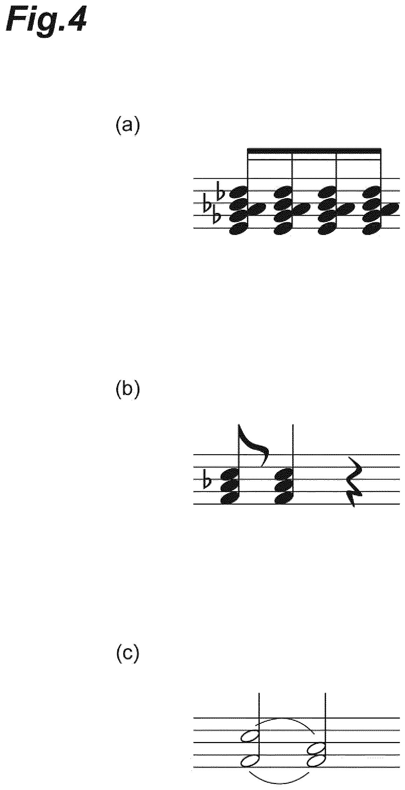

For example, an alarm sound of which the alarm level is equivalent to or higher than a reference level is configured with a dissonance, and an alarm sound of which the alarm level is lower than the reference level is configured with a consonance. In addition, for example, the alarm sound of which the alarm level is equivalent to or higher than the reference level is configured with a rhythm with a short intermittence interval, compared to an alarm sound of which the alarm level is lower than the reference level. When the alarm levels are classified into three levels or more, the alarm sounds may be configured to have a rhythm with a shorter intermittence interval as the alarm level becomes higher. In addition, for example, an alarm sound of which the alarm level is equivalent to or higher than the reference level is configured with an irregular rhythm, and an alarm sound of which the alarm level is lower than the reference level is configured with a regular rhythm. The reference level is any one of alarm levels of a plurality alarm levels and can be set as appropriate. For example, when the alarm levels are classified into three levels including the first alarm level, the second alarm level, and the third alarm level described above, the reference level may be the first alarm level, may be the second alarm level, or may be the third alarm level. FIG. 4(a) illustrates an example of a chord and a rhythm of an alarm sound for the first alarm level, FIG. 4(b) illustrates an example of a chord and a rhythm of an alarm sound for the second alarm level, and FIG. 4(c) illustrates an example of a chord and a rhythm of an alarm sound for the third alarm level.

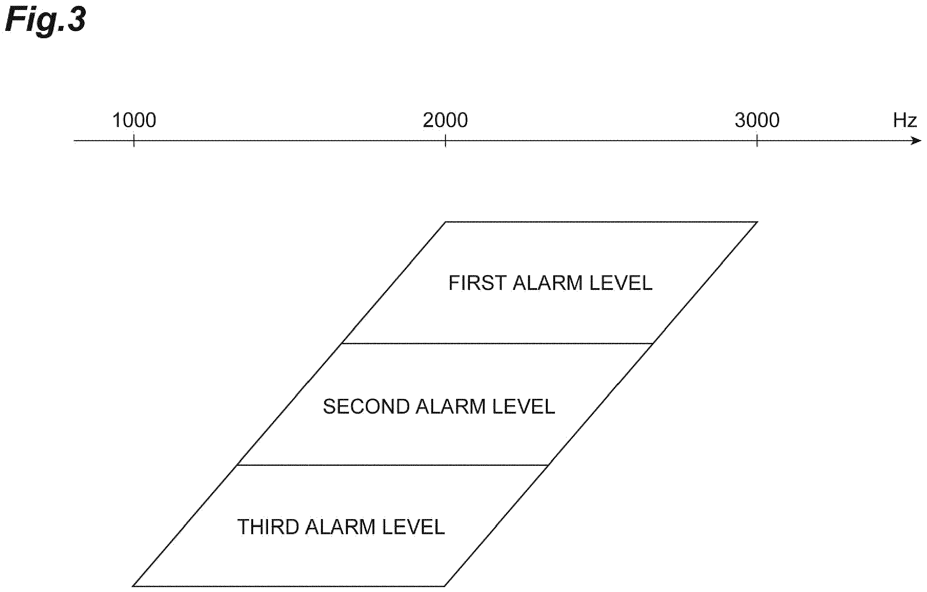

In addition, in order to facilitate conveying the urgency or the importance of an alarm, as illustrated in FIG. 3, it is preferable that the frequency region for a plurality of sounds configuring an alarm sound be higher as the alarm level becomes higher. For example, as illustrated in FIG. 3, the frequency region for the alarm sound at the second alarm level is higher than that for the alarm sound at the third alarm level, and the frequency region for the alarm sound at the first alarm level is higher than that for the alarm sound at the second alarm level. In this case, from the viewpoint that a driver can easily hear the alarm sound, it is preferable that the frequency of each of the sounds configuring the alarm sounds of each alarm level be within a range of 1,000 Hz to 3,000 Hz.

Then, the alarm generating unit 12 acquires the alarm sound corresponding to the alarm level acquired by the alarm acquiring unit 11, from the storage unit 13 and generates this acquired alarm sound. That is, the alarm generating unit 12 causes the chord and the rhythm of an alarm sound to be generated such that it varies in accordance with the alarm level acquired by the alarm acquiring unit 11. For example, the alarm generating unit 12 generates an alarm sound with a dissonance when the alarm level acquired by the alarm acquiring unit 11 is equivalent to or higher than the reference level, and generates an alarm sound with a consonance when the alarm level acquired by the alarm acquiring unit 11 is lower than the reference level. In addition, the alarm generating unit 12 generates an alarm sound having a rhythm with a short intermittence interval when the alarm level acquired by the alarm acquiring unit 11 is equivalent to or higher than the reference level, compared to when the alarm level acquired by the alarm acquiring unit 11 is lower than the reference level. In addition, the alarm generating unit 12 generates an alarm sound having an irregular rhythm when the alarm level acquired by the alarm acquiring unit 11 is equivalent to or higher than the reference level, and generates an alarm sound having a regular rhythm when the alarm level acquired by the alarm acquiring unit 11 is lower than the reference level. For example, an alarm sound is generated by emitting a sound from the speakers 3.

The storage unit 13 may store an alarm sound of one kind for the alarm levels or may store a plurality of kinds of alarm sound corresponding to the kinds of alarm for the alarm levels. When a plurality of kinds of alarm sound corresponding to the kinds of alarm are stored in the storage unit 13, the storage unit 13 may acquire an alarm sound corresponding to the kind of alarm acquired by the alarm acquiring unit 11, from the storage unit 13 and may generate this acquired alarm sound.

In this manner, in the vehicle alarm generation device 1 according to the present embodiment, since the alarm sound is configured with a plurality of sounds having a range of 200 Hz or higher, the alarm sound can include a sound in a frequency region which can be heard even by a driver having difficulty in hearing sound due to aging. Moreover, since the alarm sound is configured with a plurality of sounds, differences between sound pressures at positions inside the cabin are reduced. Accordingly, the driver can hear an alarm sound at a target sound pressure or a sound pressure close to the target sound pressure. Furthermore, since the chord and the rhythm of the alarm sound vary in accordance with the alarm level, even if the driver hears a quiet alarm sound, the driver can understand the alarm level of the alarm sound. Accordingly, the driver can easily hear an alarm sound.

In addition, an alarm sound with a dissonance is generated when the alarm level is equivalent to or higher than the reference level, so that a driver can feel a sense of seriousness. An alarm sound with a consonance is generated when the alarm level is lower than the reference level, so that the driver can feel a sense of security. Accordingly, the driver can instinctively understand the alarm level of an alarm sound.

In addition, an alarm sound having a rhythm with a short intermittence interval is generated when the alarm level is equivalent to or higher than the reference level, compared to when the alarm level is lower than the reference level, so that the driver can feel a sense of urgency. Accordingly, the driver can instinctively understand the alarm level of an alarm sound.

In addition, an alarm sound having an irregular rhythm is generated when the alarm level is equivalent to or higher than the reference level, so that a driver can feel a sense of security. On the other hand, an alarm sound having a regular rhythm is generated when the alarm level is lower than the reference level, so that the driver can feel a sense of seriousness. Accordingly, the driver can instinctively understand the alarm level of an alarm sound.

Hereinabove, an embodiment suitable for the present invention has been described. However, the present invention is not limited to the foregoing embodiment, and the present invention may be modified within a range not changing the gist disclosed in each of the claims or may be applied to other embodiments.

### Reference Signs List

1 Vehicle alarm generation device
2 ECU
3 Speaker
10 Alarm generation processor
11 Alarm acquiring unit
12 Alarm generating unit
13 Storage device

## Claims

1. A vehicle alarm generation device which generates an alarm sound inside a cabin of a vehicle, the device comprising:
an alarm acquiring unit that acquires an alarm level of an alarm to be generated; and
an alarm generating unit that generates an alarm sound corresponding to the alarm level acquired by the alarm acquiring unit,
wherein the alarm generating unit configures the alarm sound with a chord including a plurality of sounds having a range of 200 Hz or higher and causes the chord and a rhythm of the alarm sound to vary in accordance with the alarm level.

2. The vehicle alarm generation device according to claim 1,
wherein the alarm generating unit generates an alarm sound with a dissonance when the alarm level is equivalent to or higher than a reference level and generates an alarm sound with a consonance when the alarm level is lower than the reference level.

3. The vehicle alarm generation device according to claim 1 or 2,
wherein the alarm generating unit generates an alarm sound having a rhythm with a short intermittence interval when the alarm level is equivalent to or higher than the reference level, compared to when the alarm level is lower than the reference level.

4. The vehicle alarm generation device according to any one of claims 1 to 3,
wherein the alarm generating unit generates an alarm sound having an irregular rhythm when the alarm level is equivalent to or higher than the reference level and generates an alarm sound having a regular rhythm when the alarm level is lower than the reference level.
